# EUROPEAN PATENT APPLICATION

(11) **EP 0 982 956 A1**
(43) Date of publication of application: **01.03.2000**
(21) Application number: 98306780.2
(22) Date of filing: 25.08.1998
(51) Int. Cl.: H04Q 7/30

(54) **Base station equipment for a mobile cellular telecommunications network**

(71) Applicant: Lucent Technologies Inc., Murray Hill, New Jersey 07974-0636 (US)
(72) Inventor: Messenger, Michael Peter, Stroud, Gloucestershire, GL6 8QN (GB); Sudera, Suresh, Pinner, Middx, HA5 3SJ (GB)
(74) Representative: Funnell, Samantha Jane

(57) **Abstract**

In order to allow radio units to be daisy chained together, it is proposed to provide a first data port for connection via a first data link to a telecommunications switching centre and a second data port for connection via a second data link to a second radio unit, said ports being interconnected so that data can be transferred between the other radio unit and the switching centre

A problem foreseen with this arrangement is that if one unit in the chain needs to be closed down for service or replacement, subsequent units in the chain also become inoperative.

There is disclosed a separate switch unit connecting said first and second data ports to the first and second data links respectively and disconnectable from the radio unit. The switch unit includes switches selectively operative to inter-connect the first and second data links, so that said second radio unit can function without interruption in the event that the first radio unit is disconnected.

## Description

This invention relates to base station equipment for a mobile cellular telecommunications network.

Base station equipment is proposed in which a single radio unit containing all the transmitter, receiver, control and processing facilities, is supplied with power and is connected to a switching centre by data links. One pair of data linkscan have sufficient capacity to service two or more units. In order to allow units to be daisy chained together, it is proposed to provide a first data port for connection via a first data link to a telecommunications switching centre and a second data port for connection via a second data link link to a second radio unit, said ports being interconnected so that data can be transferred between the other radio unit and the switching centre

A problem foreseen with this arrangement is that if one unit in the chain needs to be closed down for service or replacement, subsequent units in the chain would also become inoperative.

Against this background, in accordance with the invention there is provided a separate switch unit connecting said first and second data ports to the first and second data link respectively and disconnectable from the radio unit, said switch unit including switches selectively operative to inter-connect the first and second data links, so that said second radio unit can function without interruption in the event that the first radio unit is disconnected.

One embodiment of the invention will now be described, by way of example, with reference to the accompanying drawings, in which:

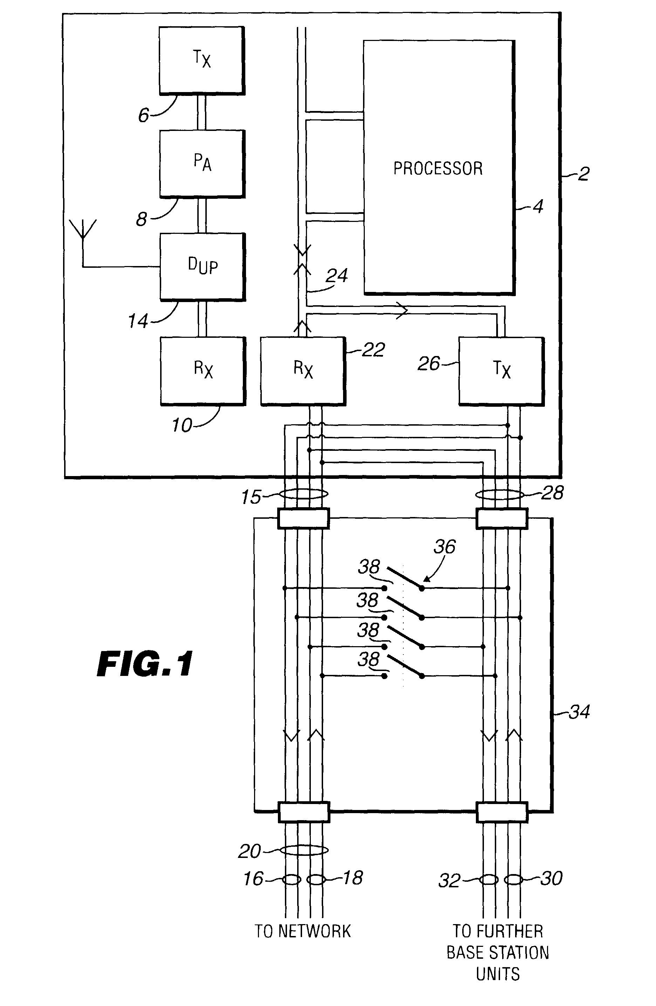

Figure 1 is a schematic circuit diagram of a base station for a mobile cellular telecommunications network and a switch unit embodying the invention; and
Figure 2 is a schematic circuit diagram of the switch unit in more detail.

Referring to the drawings, a single enclosure 2 contains all the sections of a base station unit for a mobile cellular telecommunications network, e.g. a processor 4, a radio frequency transmitter 6, a power amplifier 8, a radio frequency receiver 10 and, connecting the transmitter 8 and receiver 10 to an aerial 12, a duplexer 14.

The base station unit communicates with the land network via a port 15 at which terminate a transmit line pair 16 and a receive line pair 18 both contained in a multicore cable 20. Received data intended for the base station is extracted by a receiver 22 and put on an internal data bus 24 where it is available to the processor 4. Data for transmission to the network is extracted from the internal data bus 24 and put on the transmit pair 16 by a transmitter 26.

The quantity of data which can be transmitted on the pairs 16 and 18 by far exceeds the capacity of the base station unit. In order to avoid unnecessary duplication of cables 20, two or more base station units may be provided at one site all being served by one cable linking them to the network.

To this end, the unit is provided with a second port 28 where transmit pair 16 is linked to receive pair 30 and receive pair 18 is linked to transmit pair 32. A plurality of units can thus be linked in a daisy chain all sharing the same network cable 20.

A projected problem with this arrangement is that if any base station unit needs removal for replacement, any units which it links to the cable 20 will also have to be taken out of service.

In order to avoid this problem, a separate switch unit 34 is provided. As may be seen in more detail in

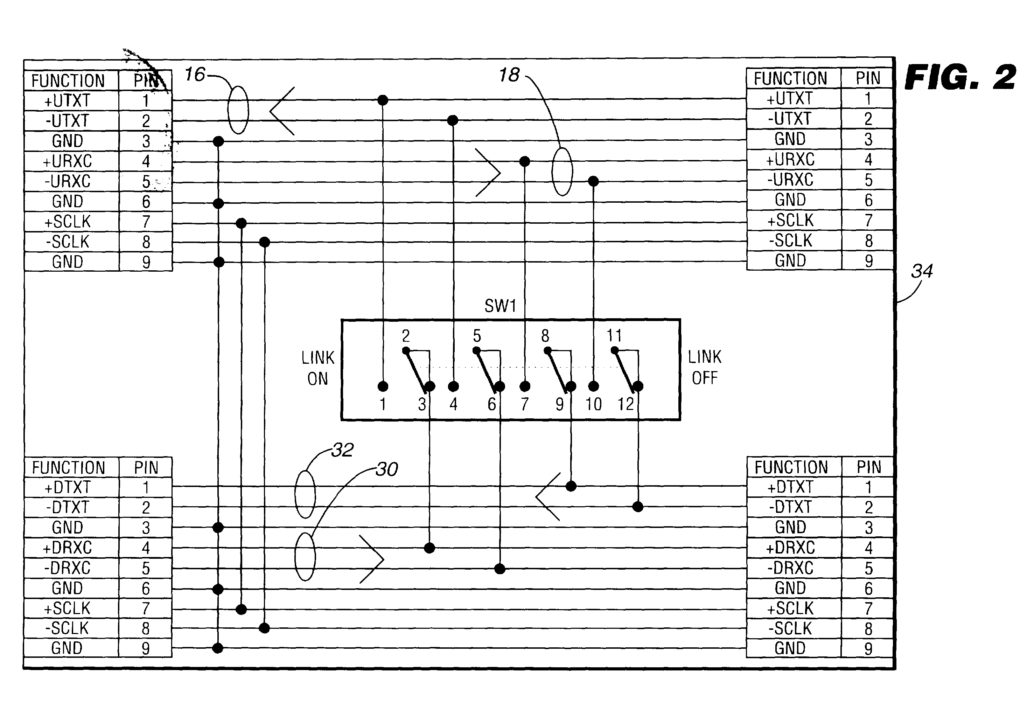

Figure 2, similar links are provided but those between the pairs 16 and 30, and between the pairs 18 and 32, are switched by a multi-pole switch 36. Thus if the base station unit has to be removed from the chain, the switch contacts 38 of the switch 36 are first closed so that subsequent units in the chain can still communicate with the network.

As may be seen in Figure 2, ground and clock signals are linked directly (without switches) by the switch unit 34.

## Claims

1. Base station equipment for a mobile cellular telecommunications network, said equipment comprising a first radio unit including a radio transmitter and receiver and having a first data port for connection via a first data transmission line to a telecommunications switching centre and a second data port for connection via a second data transmission line to a second radio unit, said ports being interconnected so that data can be transferred between the other radio unit and the switching centre; said equipment including a separate switch unit connecting said first and second data ports to the first and second data transmission lines respectively and disconnectable from the radio unit, said switch unit including switches selectively operative to inter-connect the first and second data transmission lines, so that said second radio unit can function without interruption in the event that the first radio unit is disconnected.
